(19) **Europäisches Patentamt / European Patent Office / Office européen des brevets**

(11) **EP 4 097 519 B1**

(12) **EUROPEAN PATENT SPECIFICATION**

(45) Date of publication and mention
of the grant of the patent:
**01.05.2024 Bulletin 2024/18**

(21) Application number: **20703401.8**

(22) Date of filing: **28.01.2020**

(51) International Patent Classification (IPC):
**G02B 6/126** (2006.01)    **G02B 6/27** (2006.01)
**G02B 6/12** (2006.01)    **G02B 6/02** (2006.01)

(52) Cooperative Patent Classification (CPC):
**G02B 6/126;** G02B 2006/12107

(86) International application number:
**PCT/EP2020/052063**

(87) International publication number:
**WO 2021/151471 (05.08.2021 Gazette 2021/31)**

(54) **POLARIZATION CONVERTER**

POLARISATIONSWANDLER

CONVERTISSEUR DE POLARISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.12.2022 Bulletin 2022/49**

(73) Proprietor: **TELEFONAKTIEBOLAGET LM
ERICSSON (PUBL)
164 83 Stockholm (SE)**

(72) Inventors:
• **D'ERRICO, Antonio
56100 Pisa (IT)**
• **BIGONGIARI, Alessandra
56100 Pisa (IT)**

(74) Representative: **Ericsson
Patent Development
Torshamnsgatan 21-23
164 80 Stockholm (SE)**

(56) References cited:
**CN-A- 109 270 627    US-A1- 2014 153 862**

• **YIN XU ET AL: "Ultracompact and high efficient
silicon-based polarization splitter-rotator using a
partially-etched subwavelength grating coupler",
SCIENTIFIC REPORTS, vol. 6, no. 1, 16 June 2016
(2016-06-16), XP055690413, DOI:
10.1038/srep27949 cited in the application**

**Description**

**Technical Field**

The disclosure relates to a polarisation converter, for example for a photonic integrated circuit. The disclosure further relates to an optical device comprising the polarisation converter, an optical receiver comprising the optical device and telecommunications equipment comprising the optical device.

**Background**

YIN XU ET AL: "Ultracompact and high efficient silicon-based polarization splitter-rotator using a partially-etched subwavelength grating coupler", SCIENTIFIC REPORTS, vol. 6, no. 1, 16 June 2016 describes an ultracompact and high efficient silicon based polarization splitter rotator (PSR) using a partially etched subwavelength grating (SWG) coupler. The proposed PSR consists of a taper integrated SWG coupler combined with a partially-etched waveguide between the input and output strip waveguides to make the input transverse-electric (TE) mode couple and convert to the output transverse-magnetic (TM) mode at the cross port while the input TM mode confines well in the strip waveguide during propagation and directly outputs from the bar port with nearly neglected coupling.

Photonic chips are a promising technology for next generation transceivers, being capable to handle a larger bandwidth at a cost per bit that becomes increasingly smaller as the data throughput is increased. Future applications see Photonic Integrated Circuits, PIC, replace part of the electrical connections between single Electrical Integrated Circuits, EIC, inside large multi-chip modules. Optical components in PICs are structurally birefringent and typically exhibit a polarization dependent behaviour. Modulators such as Electro-Optical Modulators, EOM, are extremely sensitive to polarization since the driving field determines an absorption in the active material that is dependent on the polarization of incoming light. Other elements, such as ring resonator and couplers, behave differently depending on the polarization mode that is propagated.

Light is typically delivered into a PIC by optical fibres, in which the light can suffer polarization rotations so that polarization changes continuously along the path; standard single mode fibre does not preserve the polarization due to bending and imperfections so that the performances and reliability of the PIC are compromised.

In order to achieve a performance that is reasonably polarization independent (e.g. a power transmission penalty below 2dB), different polarization diversity schemes are implemented in PIC devices. Generally, these schemes comprise polarization splitters and rotators integrated in PIC devices. Polarization splitters separate two orthogonal polarizations and send each of them to a different path in the PIC. The separation is typically carried out near where the PIC couples with a light carrying element, e.g. an optical fibre, that provides light having random polarization. The coupling between the PIC and the light carrying element can be classified into two categories: 1) edge coupling, where the interface is located on the lateral surface of the waveguide; and 2) vertical coupling, where the light carrying element (fibre) is perpendicular to the PIC plane, and coupling is achieved via gratings formed on the PIC surface.

In the polarization diversity schemes used near edge coupled interfaces, the two polarizations are typically split via adiabatic structures. Then one polarization path is rotated and merged with the other path via directional couplers.

In the case of vertical coupling, the splitting is performed by 2D grating couplers that project the polarization of light in the fibre into two different directions in the PIC plane. These directions are perpendicular, and each correspond to a waveguide input of the PIC, so that in both branches the polarization corresponds to the main mode of the waveguide and does not need to be rotated. Then the two branches can be coupled into a single output via directional couplers.

Polarization splitters based on adiabatic or grating structures can efficiently split the incoming light into two orthogonally polarized components, with an acceptable loss, of around 3-4 dB. However, in the existing schemes, light is separated into two directions in space so that the two beams travel different paths. Ideally, the two paths into which light is separated should be made identical. However, fabrication tolerances exclude this possibility: the effective optical path is different for the two beams mainly due to the effective refractive index that is very sensitive to small variations to width, roughness and other imperfections. This can cause a phase difference between the two beams at the point where they merge that varies with path length.

This issue is present both in the case of edge coupling and vertical coupling of a PIC with an external device. In order to avoid interference between the two beams and control the output after merging, phase shifters are employed. Adaptive polarization controllers are used to track the state of polarization of a travelling electromagnetic wave at the output of a waveguide and recover from polarization random fluctuations and optimize, e.g., the matching between the actual wave polarization and the sensibility of a receiver to a particular incoming state of polarization.

The ideal polarization controller should be endless: capable to follow the state of polarization of the input light without the need to reset and eventually unwind toward feasible rotational conversions. To achieve this goal, due to the limited range of variability of the rotational conversion controllers (e.g. based on Faraday polarization rotators), a number of rotators and a complex algorithm are needed. For example, polarization controllers can be driven following smart strategies to ensure full operability and avoid such the limitations. WO 2018/145753 A1 describes an analytical model to set the optimal point of operation unwinding the polarization rotators with in-range control values, thus avoiding the saturation of the operative system. Yin Xu and Jinbiao Xiao "Ultracompact and high efficient silicon-based polarization splitter rotator using a partially etched subwavelength grating coupler", Nature, 6:27949, 2016, describes a polarization-splitter-rotator for on chip polarization manipulation for silicon-on-insulator material platforms consisting of a taper-integrated subwavelength grating, SWG, coupler combined with a partially-etched waveguide between input and output strip waveguides.

## Summary

It is an object to provide an improved polarisation converter. It is a further object to provide an improved optical device. It is a further object to provide an improved optical receiver. It is a further object to provide an improved telecommunications equipment.

An aspect of the invention provides a polarisation converter comprising a substrate, a waveguide core provided on the substrate and a sub-wavelength grating structure. The waveguide core has a top surface and a side surface. The sub-wavelength grating structure extends from the waveguide core. The sub-wavelength grating structure comprises a top section extending outwardly from the top surface of the waveguide core and a lateral section extending laterally from the side surface of the waveguide core and from the top section. A lateral width of one of the top section and the lateral section reduces along a length of the waveguide core.

The polarisation converter advantageously enables efficient conversion of the polarization of a mode with arbitrary polarization into a mode supported by a waveguide core, without adaptive control mechanisms. TM and TE fields propagate together through the polarisation converter, as the field propagating in the sub-wavelength grating is never decoupled from the field propagating in the waveguide core. This avoids substantial phase mismatch between a first mode propagating in the waveguide core and a second mode that is rotated by propagating in the sub-wavelength grating and then coupled into the waveguide core after rotation. The polarisation converter may advantageously adapt any incoming polarization to a single guided mode without losing coherence in phase and frequency between polarisation modes.

An aspect of the invention provides an optical device comprising a photonic integrated circuit and a polarisation converter. The polarisation converter is arranged to output light having a desired polarisation mode towards the photonic integrated circuit. The polarisation converter comprises a substrate, a waveguide core provided on the substrate and a sub-wavelength grating structure. The waveguide core has a top surface and a side surface. The sub-wavelength grating structure extends from the waveguide core. The sub-wavelength grating structure comprises a top section extending outwardly from the top surface of the waveguide core and a lateral section extending laterally from the side surface of the waveguide core and from the top section. A lateral width of one of the top section and the lateral section reduces along a length of the waveguide core.

An aspect of the invention provides an optical receiver comprising an optical device comprising a photonic integrated circuit and a polarisation converter. The polarisation converter is arranged to output light having a desired polarisation mode towards the photonic integrated circuit. The polarisation converter comprises a substrate, a waveguide core provided on the substrate and a sub-wavelength grating structure. The waveguide core has a top surface and a side surface. The sub-wavelength grating structure extends from the waveguide core. The sub-wavelength grating structure comprises a top section extending outwardly from the top surface of the waveguide core and a lateral section extending laterally from the side surface of the waveguide core and from the top section. A lateral width of one of the top section and the lateral section reduces along a length of the waveguide core.

An aspect of the invention provides telecommunications equipment comprising an optical device comprising a photonic integrated circuit and a polarisation converter. The polarisation converter is arranged to output light having a desired polarisation mode towards the photonic integrated circuit. The polarisation converter comprises a substrate, a waveguide core provided on the substrate and a sub-wavelength grating structure. The waveguide core has a top surface and a side surface. The sub-wavelength grating structure extends from the waveguide core. The sub-wavelength grating structure comprises a top section extending outwardly from the top surface of the waveguide core and a lateral section extending laterally from the side surface of the waveguide core and from the top section. A lateral width of one of the top section and the lateral section reduces along a length of the waveguide core.

## Brief Description of the drawings

Embodiments of the disclosure will now be described, by way of example only, with reference to the accompanying drawings.

Figure 1 is a diagrammatic illustration of a polarisation converter according to an embodiment of the invention;

Figure 2 is a diagrammatic illustration of electric and magnetic fields of localised waveforms that develop at the interface between two media of different refractive index;

Figure 3 shows illustrates the duty-cycle of the sub-wavelength grating structures according to embodiments of the invention;

Figures 4 to 9 are diagrammatic illustrations of polarisation converters according to embodiments of the invention;

Figure 10 is a diagrammatic illustration of two fabrication layers from which a polarisation converter according to an embodiment of the invention may be formed;

Figures 11 and 12 are diagrammatic illustrations of optical devices according to embodiments of the invention;

Figure 13 is a diagrammatic illustration of an optical receiver according to an embodiment of the invention; and

Figure 14 is a diagrammatic illustration of telecommunications equipment according to an embodiment of the invention.

## Detailed description

The same reference numbers will used for corresponding features in different embodiments.

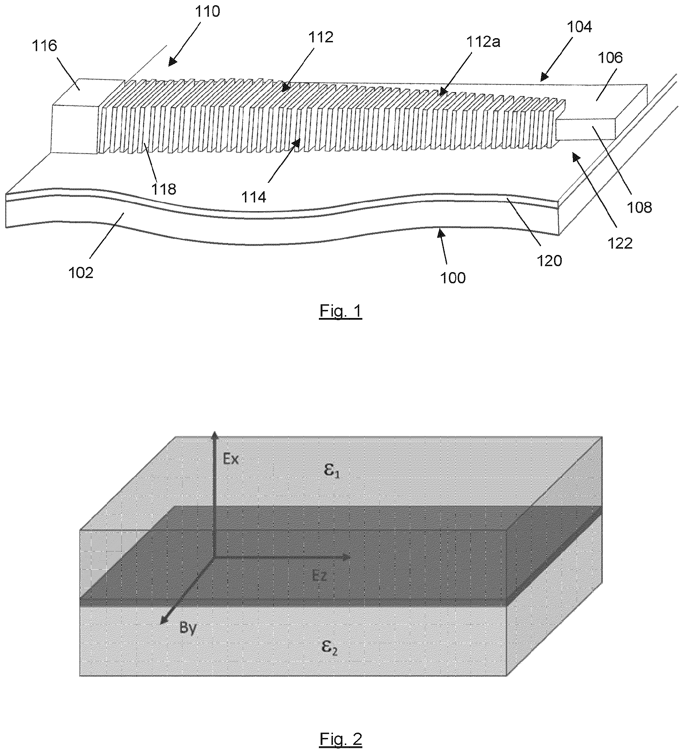

Referring to Figures 1 to 4, an embodiment of the invention provides a polarisation converter 100 comprising a substrate 102, a waveguide, a sub-wavelength grating, SWG, structure 110 and an input waveguide. Light is input into the polarization converter at the input waveguide core and continues into the waveguide core 104.

The waveguide comprises a waveguide core 104, having a top surface 106 and a side surface 108, and cladding 120, 122. The input waveguide comprises a waveguide core 116 and cladding 122.

The waveguide core 104 is provided on the substrate 102, on a cladding layer 120 on the bottom of the waveguide core, to avoid direct contact between the waveguide core and the substrate. The waveguide core is surrounded by cladding 122, i.e. to the lateral sides of the waveguide core. The cladding layer 120 is of a material that has a lower refractive index than the waveguide core. The surrounding cladding 122 also has a lower refractive index than the waveguide core. For example, a silicon waveguide core having a refractive index, n, of 3.5 may be formed on an insulator substrate with a cladding layer 120 of silicon oxide, SiO, or silicon dioxide, $SiO_2$, (n~1.4) between the substrate and the core, and a surrounding cladding 122 of an air cladding (n=1), silicon oxide, SiO, or silicon dioxide, $SiO_2$, cladding (n~1.4).

The SWG structure 110 extends from the top surface and a side surface of the waveguide core. In particular, the SWG structure 110 is located on only the top surface and one side surface of the waveguide core. The SWG structure comprises a top section 112 that extends outwardly from the top surface of the waveguide core and a lateral section 114 that extends laterally from both the side surface of the waveguide core and from the top section. In this example, the SWG cross section is taller and larger than the input waveguide core 116 cross section and is placed asymmetrically across the waveguide core 104.

The lateral width of the top section 112 of the SWG structure reduces along a length of the waveguide core 104, in the direction of propagation of light.

Referring to Figure 1, the direction of propagation of light is from the input waveguide core 116 along the waveguide core 106, i.e. substantially left to right as shown. References to height refer to a substantially vertical direction, i.e. the top surface of the waveguide core is vertically at the top of the waveguide core. The top surface may also be considered as opposite to the substrate. References to a lateral direction refer to a direction perpendicular to the direction of propagation of light along the waveguide core. The lateral direction is also perpendicular to the vertical or top direction. As such, the lateral direction is substantially out of the page as shown. As described, the top section 112 of the SWG structure is on a top surface of the waveguide core. The lateral section 114 of the SWG structure is on a lateral surface of the waveguide core. These directions are described relative to each other, and do not limit the orientation of the polarization converter for which the features apply. For example, the term "top surface" is applicable to identify a particular surface however the waveguide or polarization converter is arranged in space.

The SWG structure 110 is configured to achieve three functions:

i) separation of the two polarization components, TE and TM, of input light of arbitrary polarization;

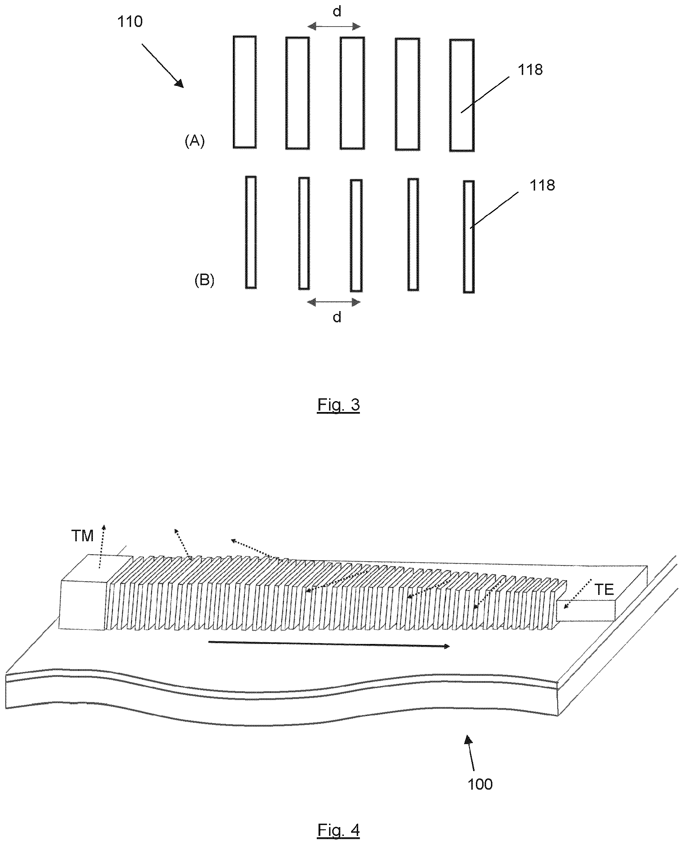

ii) rotation of the TM component into the TE mode (as illustrated by the dashed arrows in Figure 4); and

iii) adaptation of the effective refractive index of the incoming TM mode during the rotation.

The SWG structure is formed from grating elements 118 which are characterized by the following parameters:

i) periodicity: by definition, the periodicity (or "pitch"), d, of the grating elements is less than the wavelength of the incoming light, to avoid reflection via Bragg scattering;

ii) duty cycle: the percent of full/empty volume in a period of the SWG (see Figure 3);

iii) square section of the grating elements; and

iv) tapering: smooth variation of the lateral width of the grating elements.

During propagation of light through the polarisation converter 100 the transverse magnetic field, TM, is coupled to the top section 112 of the SWG structure, behaving basically as a surface wave, progressively assuming the transverse electric, TE, mode, favourable for propagation in the waveguide core 104.

As the light propagates through the polarisation converter 100, a portion of the light couples progressively to the SWG structure 110 from the waveguide core 104. The process of coupling with the SWG depends on the polarization of the light so that the TE mode is coupled efficiently with the lateral section 114 of the SWG whereas the TM mode is coupled more efficiently to the top section 112 of the SWG.

Not all the light will be coupled to the SWG structure 110, some will remain confined in the waveguide core 104. Due to the birefringence of photonic waveguides, the waveguide will more efficiently support (i.e. will confine efficiently) either a TM or TE mode, depending on the cross-sectional shape of the waveguide core. For example, in standard silicon photonic waveguides, where the cross-sectional width (i.e. perpendicular to the direction of propagation of light) is the greater dimension, as in this example, with a width around 450nm and height around 220nm, the supported mode is the fundamental TE mode. All other modes tend to be suppressed. Where the cross-sectional height is the greater dimension, the supported mode is the fundamental TM mode.

The mode that is less favourably supported by the waveguide core 104 will be more prone to couple with the SWG structure 110, since the conditions for propagation in the SWG structure are more favourable than those in the waveguide core. The conditions for propagation may depend on the relative shape of the waveguide or SWG structure, i.e. a mode is favoured if aligned with a longer dimension of waveguide or SWG structure, and less favoured if aligned with a shorter dimension of waveguide or SWG structure. The mode having more favourable conditions for propagating in the waveguide core will instead have a minor coupling with the SWG structure, remaining bound to the waveguide core 104.

For example, where there is an arbitrary polarized mode to be coupled to the waveguide core 104 supporting TE mode only, the polarization conversion will happen as follows:

1) The less favourably supported mode, TM in this example, is coupled to the top section 112 of the SWG structure. The TE component propagates in the waveguide core 104, with eventually a small portion coupling to the lateral section 114 of the SWG structure.

2) The width of the top section 112 is gradually reduced (tapered) along the length of the waveguide core 104, in the direction of propagation of the light (indicated by the arrow in Figure 4). For example, the lateral width of the top section 112 reduces linearly along the length of the waveguide core. In some examples, the reduction is from a full width of the waveguide core. The reduction is to a fraction of the width of the waveguide core 104, e.g. approximately a third of the width of the waveguide core, or to zero width.

In some examples, the top section 112 has a lateral extent which reduces along the direction of propagation. In some aspects, the top section 112 maintains connection with the lateral section 114 along its length. A position of the edge of the top section 112, lateral to the lateral section 114, varies along the direction of propagation of light. As such, the lateral extent of the top section 112 reduces asymmetrically. The lateral extent of the top section 112 extending from the lateral section 114, i.e. that lateral surface of the waveguide 106, tapers to a reduced lateral extent along a direction of propagation of the light.

The TM mode within the top section 112 is rotated progressively (as indicated by the dashed arrows in Figure 4) and becomes perpendicular to the lateral section 114 of the SWG. This rotation can happen because the TM field, initially coupled to the top section, behaves basically as a surface wave, that is confined in proximity of the SWG structure. The SWG grating elements are seen by light as a global averaged interface plane, so that the light propagates along it and is able to migrate from the top section to the lateral section of the SWG structure.

After this stage the rotated field has the polarization that is favourably supported for propagating in the waveguide core 104.

3) The lateral section 114 of the SWG structure may be gradually reduced in width along a further length of the waveguide core so that the rotated field within the lateral section is progressively coupled into the waveguide core 104. In some aspects, a lateral extent of the lateral section 114 reduces in the direction of propagation of the light. The lateral section 114 extends less far in a lateral direction from the lateral surface of the waveguide core 106, in the direction of propagation of the light. In some examples the reduction in lateral extent of the lateral section 114 occurs over a length of the waveguide core 104 which is coincident or partially coincident with the length of the top section 112 which is tapering. As such, at least part of the tapering top section is at the same part of the length of the waveguide core as the tapering lateral section. In other examples, the lateral extent of the lateral section 114 reduces in the direction of propagation of the light only on a part of the waveguide core for which the top section 112 has fully tapered or is at a minimum lateral extent.

The polarisation conversion/rotation is based on two mechanisms: effective refractive index engineering; and resonant excitation of an interface wave.

The first mechanism is based on the management of the effective refractive index of the guiding photonic structure, i.e. the SWG structure 110. The effective refractive index determines the confinement of light and the characteristics (field distribution, polarization, losses) of the propagating light. The SWG is configured to form a medium that behaves as a homogeneous medium. The engineered effective index of the SWG is obtained by forming the SWG structure from grating elements of alternating materials of different refraction index, with the period of the grating smaller than the wavelength of the light propagating in the SWG structure, so to avoid Bragg reflection.

The effective refractive index of the SWG structure 110 can be varied by varying the duty cycle of the grating, as illustrated in Figure 3. The same grating periodicity, d, can be achieved alternating grating elements 118 and lower refractive index material or empty-space of different thicknesses; for example, the SWG in Figure 3 (A) has equal thickness grating elements 118 and empty-space, while the SWG in Figure 3 (B) has grating elements 118 and empty-space of different thickness, the grating elements being less thick than the empty-space.

For example, for a polarization converter 100 configured for light having a wavelength of 1550nm, the SWG structure has a grating period in the range 100-300nm, to give good performance in terms of field polarization rotation, and the optimal duty cycle is in the range 0.4-0.6.

The second mechanism is the resonant excitation of an interface wave, via the SWG. This type of wave is characterized by a field distribution that is confined at the interface between two media. In the case of the SWG structure 110, the interface is represented by the SWG itself that behaves as a sort of periodic rugosity (variation of amplitude in the height of a surface). By correctly selecting the periodicity of the SWG structure 110 it is possible to couple the light in the waveguide core 104 to the interface comprising the SWG. The periodicity of the SWG provides the conditions for the light in the waveguide core to propagate along the interface, provided that the electric field component is perpendicular to the SWG.

In the polarization converter 100, the SWG structure 110 is protruding both on the top and lateral sides of the waveguide core 104 so that both polarizations, TE and TM, can couple to the SWG structure. This enables polarization rotation to convert the TM field, coupled to the top section 112, into the TE mode, that couples to the lateral section 114. When the top section is gradually reduced in width, the interface wave moves to the lateral section, causing the rotation of the orientation of the electric field in the direction perpendicular to the side wall, that is the TE polarization. The same mechanism can also be used to operate the opposite conversion, from TM to TE polarization, by gradually reducing the width of the lateral section 112.

The SWG structure 110 is formed in such a way that there is no discontinuity between the top section 112 and the lateral section 114, which ensures a smooth rotation of the original TM field around the waveguide core 104. As such, the top section 112 and lateral section 114 are integral parts of a single SWG structure. The polarization rotation occurs without any auxiliary waveguide and there is no need for a photonic element to reconnect a rotated field with a non-rotated one, as is required by the prior art polarization splitter rotator. The latter is one of the most important advantages of the polarization converter 100: the TM and TE fields propagate together along the waveguide core 104, as the interface wave, in the SWG structure 110, is never decoupled from the field in the waveguide core 104. This avoids substantial phase mismatch between the TE mode propagating in the waveguide core and the TE mode (converted from the input TM mode) that is coupled into the waveguide core after rotation. The polarization converter may also have a short footprint, of around 10μm, which is much shorter than prior art adiabatic polarization splitters which typically have a length of the order of 100 μm, and this mitigates building up a phase mismatch between the two fields.

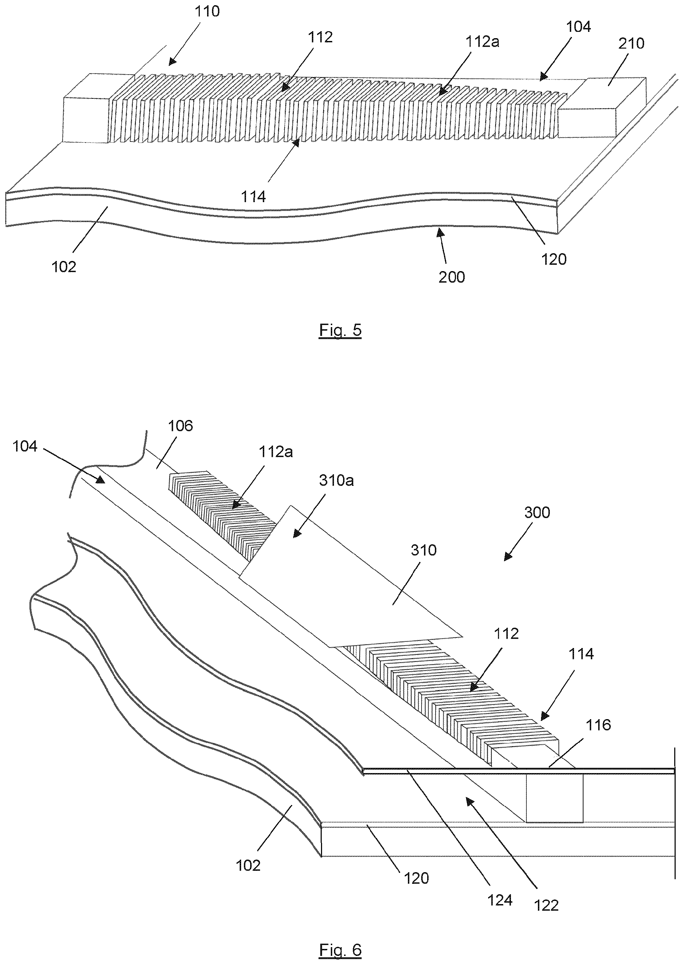

In an embodiment, as illustrated in Figure 5, the polarization converter 200 additionally comprises an output waveguide core 210.

Referring to Figure 2, interface waveguides (also known as surface waveguides or plasmons) are localized waveforms that develop at the interface between two media of different refraction index. In Raether H., "Surface plasmons on smooth and rough surfaces and on gratings", Springer, Berlin (1988), is clearly demonstrated that, to have non-trivial solutions for an interface wave the incoming wave is TM with respect to the interface plane between two media with refraction index $\varepsilon_1$ and $\varepsilon_2$, separated by a contact interface.

The electric field in the direction perpendicular to the interface is given by

$$E_x = e^{-q_1 x} e^{ikz - i\omega t} H(x) + e^{q_2 x} e^{ikz - i\omega t} H(-x)$$

where H(x) is the Heaviside step function. $k=2\pi/\lambda$ is the wave vector parallel to the interface and $q(i = 1; 2)$ are the evanescence lengths in the two media (in this notation both k and q are real).

$$q_i = \sqrt{k^2 - \frac{\epsilon_i \omega^2}{c^2}} \qquad\qquad (M)$$

Applying Maxwell's equations, we obtain

$$E_{1x} = -\frac{kc}{\omega\epsilon_1} B_y$$

$$E_{2x} = -\frac{kc}{\omega\epsilon_2} B_y$$

$$E_{1z} = -\frac{q_1 c}{\omega\epsilon_1} B_y$$

$$E_{2z} = \frac{q_2 c}{\omega\epsilon_2} B_y$$

The matching relationship is found by imposing the continuity of the electric field along the surface $E_{1z}=E_{2z}$.

$$\frac{q_1}{q_2} = -\frac{\epsilon_1}{\epsilon_2}$$

where $\varepsilon_1$ and $\varepsilon_2$ are the relative dielectric constant of the media. For the application into a silicon photonics waveguide, the refractive index is $n_1$=3.5 in the core region and $n_2$=1.2 in the cladding region, with $\epsilon_i = n_i^2$ .

This property gives the wavevector of the surface wave excited by the driving field. For $\sigma$=0 the resonance condition gives $k_s$=1.13$\omega$/c for the wavevector of the surface wave. To efficiently excite such a wave, the momentum of the light propagating in the core has to match the momentum of the surface wave, i.e. $k_c$=$k_s$. Since for silicon the refractive index is around 3.5, when have $k_c$=3.5$\omega$/c. Therefore, it is necessary to add additional momentum to the surface wave; this can be obtained by adding a periodic refractive index variation along the surface

$$k_c = \frac{\omega}{c}\left(1.13 + \frac{m\lambda}{a_{mod}}\right)$$

where $a_{mod}$ is the period of the modulation and m is an integer.

The periodic refractive index variation in the polarization converter 100 is obtained by the SWG structure 110 that alternates grating elements 118 of silicon with lower refractive index $SiO_2$ or air.

The polarization converter 100, 200 advantageously enables efficient conversion of the polarization of a mode with arbitrary polarization into the mode supported by a particular waveguide core without adaptive control mechanisms and through the use of surface wave enhancement. The polarization converter 100, 200 advantageously enables any incoming polarization to be adapted to a single guided mode without losing coherence in phase and frequency, leveraging on surface wave generation and propagation.

In an embodiment, the polarization converter 100 further comprises a layer of a material having a refractive index higher than the refractive index of the surrounding cladding 122, 124. The layer of material is arranged to extend across at least part of the SWG structure 110. For example, in the example above with an $SiO_2$ cladding (n~1.4) a thin layer of silicon nitride, SiN, (n~2) may be provided across at least part of the SWG structure and the cladding.

Providing the layer of higher index material can support the polarization rotation of the TM mode, as it can move the field distribution of the guided mode towards the top surface of the waveguide core 104. This is due to the presence of the higher index material causing a local increase of the refraction index, that has a guiding effect on light propagating in the polarization converter. The presence of the higher index material enhances the polarization conversion efficiency. It may also reduce leakage of light from the waveguide core 104 towards the substrate 102, improving the confinement of light propagating in the waveguide core.

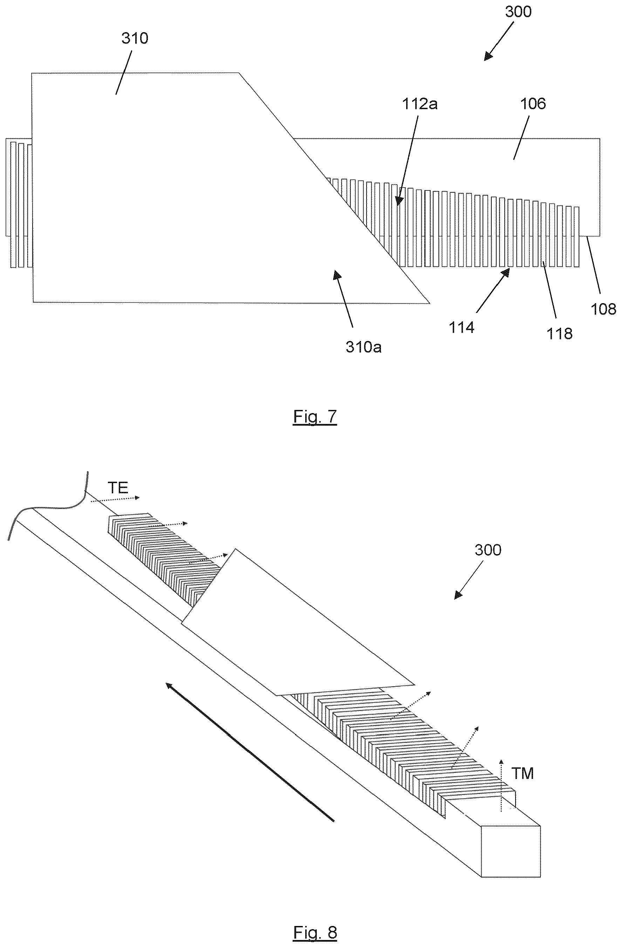

The layer of higher refractive index material may be a two-dimensional material, such as graphene, configured to support propagation of light. Referring to Figures 6 to 8, an embodiment provides a polarization converter 300 comprising a graphene foil 310 provided across part of the SWG structure 110. The substrate 102 and cladding 120, 122, 124 are shown in Figure 6 but are left out of Figures 7 to 9 clarity of the drawings.

Where the surrounding cladding 122 is a solid cladding, such as $SiO_2$ rather than air, the graphene foil 310 may supported by the surrounding cladding 122. Alternatively, an upper layer 124 of cladding material may be provided on top of the SWG structure 110 and the surrounding cladding 122 and the graphene foil supported on the upper cladding layer 124. In either case, the graphene foil is provided at a functional distance from the top of the SWG structure 110 to ensure interaction with the electromagnetic field propagating in the top section 112 of the SWG structure. The graphene foil (or other material with high index) is positioned at a distance that is less or equal to the extinction length of the light travelling through the polarization converter. The extinction length is the distance from the top section 112 at which the intensity of the light wave is such that the graphene (or other material) layer is not affected by the electromagnetic field.

The graphene foil 310 can absorb any TM mode light that leaks from the SWG structure 110. An advantage of using graphene is that it is a broadband material and can be used at different operating wavelengths. The graphene foil enhances the coupling of the light from the waveguide core 104 with the top section 112 of the SWG structure, as it produces an effect on the effective refractive index such to move the field distribution towards the top of the waveguide core.

As illustrated in Figures 6 to 8, the layer of higher refractive index material, in this example the graphene foil 310, has a trapezoidal shape. In some aspects, the graphene foil, or graphene layer, is shaped such that the lateral width of an end section 310a of the layer reduces along the length of the waveguide, in the direction of light propagation. The lateral width of the graphene layer, or other two-dimensional material, refers to the lateral width which overlaps with the waveguide core 106. As such, the coverage of the waveguide core 106 with the graphene layer reduces in lateral extent along the length of the waveguide, in the direction of light propagation. The trapezoidal shape couples any light propagating in the graphene foil (having leaked from the top section 112 of the SWG structure) back into the SWG structure.

Using graphene as the higher index material layer can be advantageous when there is a convenience in exploiting its opto-electronic properties, for generating e.g. a selective absorption or amplification. These functions are achieved through biasing of the graphene foil. The use of a graphene foil enables functionality of switching light on/of at the polarization converter or amplifying the incoming light, for example to compensate for any losses incurred during the polarization conversion.

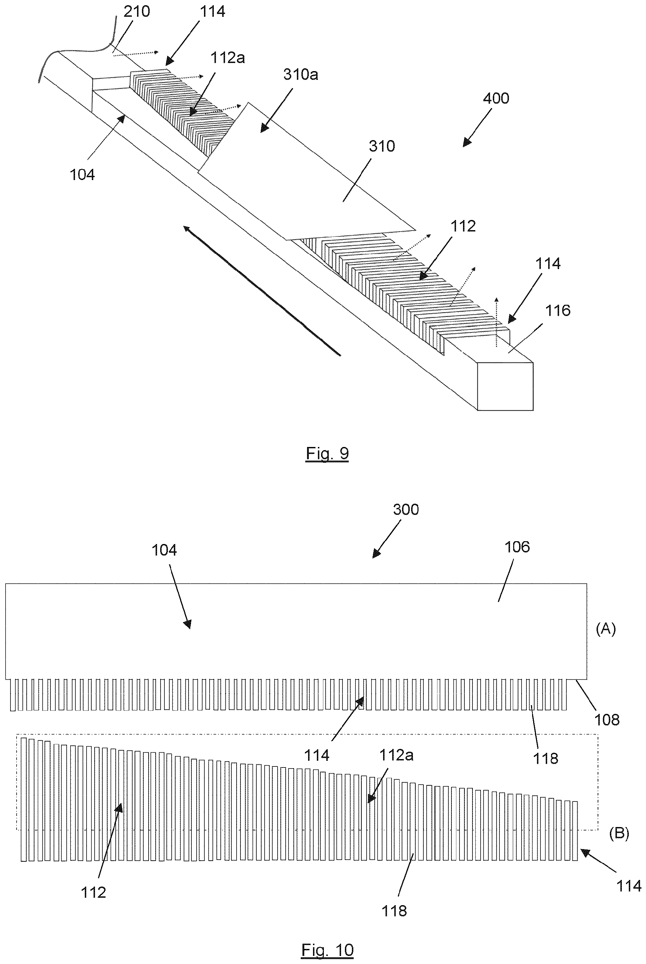

In an embodiment, illustrated in Figure 9, the polarization converter 400 additionally comprises an output waveguide core 210.

Referring to Figure 10, the polarisation converter 100, 200, 300 may be formed as two vertical layers using a two-step processes for fabricating the Si waveguide core 104 and the SWG structure 110. Figure 10(A) shows the bottom layer that is as tall as the top surface of the waveguide core 104, e.g. 220 nm and comprises the waveguide core 104 and part of the lateral section 114 of the SWG structure. Figure 10(B) shows the top layer comprising the top section 112 and the remaining part of the lateral section 114 of the SWG structure. The two layers are formed in such a way that there is no discontinuity between the top section 112 and the lateral section 114, which ensures a smooth rotation of the original TM field within the SWG structure 110.

This two-layer fabrication approach minimizes the production effort in terms of complexity of lithography and deposition steps. As these fabrication processes are implemented with planar patterns on a photonic chip (horizontal), any feature extending in the vertical direction (perpendicular to the chip plane) requires one more step of fabrication. Creating a grating with, for example, a gradually decreasing height, would require a complex process, whereas a gradually decreasing width is obtained with a process that is as simple as fabricating a standard waveguide.

An embodiment provides a polarisation converter 100, as illustrated in Figure 1, comprising a substrate 102, a waveguide core 104 provided on a cladding layer 120 provided on the substrate, and a sub-wavelength grating, SWG, structure 110 extending from the waveguide core. The waveguide core has a top surface 106 and a side surface 108. The SWG structure comprises a top section (112) extending outwardly from the top surface of the waveguide core and a lateral section 114 extending laterally from the side surface of the waveguide core and from the top section 112. A lateral width of one of the top section and the lateral section reduces along a length of the waveguide core.

In an embodiment, the waveguide core 104 has a cross-sectional shape configured to preferentially support propagation of light having one of a transverse electric, TE, mode and a transverse magnetic, TM, mode. The lateral width reduction of the SWG structure 110 is configured to cause rotation of the polarisation of light having the other of the TE mode and TM mode into the preferentially supported one of the TE mode and the TM mode.

In an embodiment, the waveguide core 104 has a cross-sectional shape that has width as the largest dimension, so that it is configured to preferentially support propagation of light having the TE mode. The lateral width of the top section 112a reduces along a length of the waveguide core to cause rotation of the polarisation of light from the TM mode into the TE mode.

In an embodiment, the lateral width of the lateral section 114 reduces along a further length of the waveguide core, after the reduction in the lateral width of the top section 112a.

In an embodiment, the waveguide core has a cross-sectional shape that has height as the largest dimension, so that it is configured to preferentially support propagation of light having the TM mode. The lateral width of the lateral section reduces along a length of the waveguide core to cause rotation of the polarisation of light from the TE mode into the TM mode.

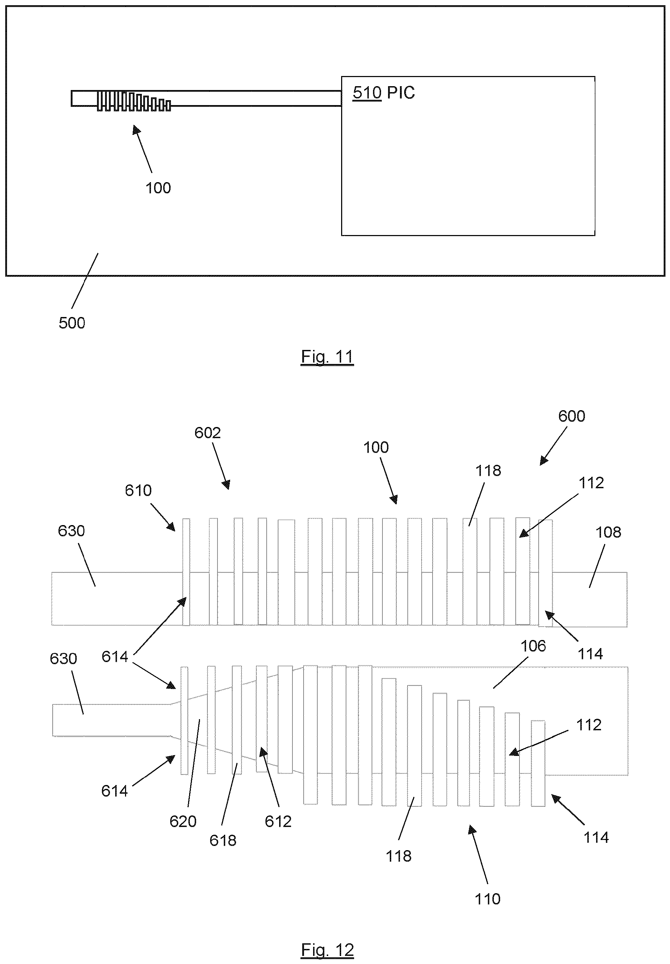

Referring to Figure 11, an embodiment provides an optical device 500 comprising a photonic integrated circuit, PIC, 510 and a polarisation converter 100. It will be appreciated that any of the polarisation converters 100, 200, 300 may be used. The polarisation converter is arranged to output light having a desired polarisation mode towards the photonic integrated circuit. The optical device 500 may be provided in a photonic chip.

PICs comprise a network of waveguides that route the light inside the PIC and optical components, such as modulators, Bragg reflectors, switches etc, provided along the waveguides, for performing different functions. Light confinement in a PIC is obtained via index contrast: the waveguide is formed by a high index core and lower index cladding. In a Silicon-on-insulator platform PCI the core is made in Si having refraction index around 3.4, and the cladding material is SiO2, having refraction index around 1.4. Conventional waveguides in PICs have a rectangular section and are typically 450nm wide and 220 nm high. This aspect ratio corresponds to supporting a transverse electric, TE, mode.

In an embodiment, shown in Figure 12, the optical device 600 additionally comprises an edge coupler 602, an input waveguide core 630 and a further SWG structure 610.

The edge coupler 602 is arranged to deliver light from the input waveguide core 630 to the polarisation converter 100. The input waveguide core 630 in this example comprises a small, square-section waveguide core and the edge coupler comprises a tapered waveguide core 620 having a width that increases along the length of the waveguide core, in the direction of propagation. The tapered waveguide core couples the input waveguide core 630 to the waveguide core 104 of the polarisation converter 100.

An edge coupler is a photonic element that adapts a large mode (typically $10\,\mu$m) of an input optical fibre to the much smaller mode size typically supported in a photonic chip ($<1\;\mu$m for a Si waveguide).

The further SWG structure 610 extends from the tapered waveguide core and comprises a top section 612, extending outwardly from a top surface of the tapered waveguide core, and lateral sections 614, extending laterally from the side surfaces of the tapered waveguide core and from the top section 612.

The further SWG structure assists the tapering, so that the arbitrary mode in the input waveguide core is converted into a TE mode propagating in the waveguide core 104, having a standard rectangular section. The duty cycle of the further SWG can be varied to obtain a progressively increasing refractive index (smaller duty cycles correspond to smaller refractive index), that corresponds to a progressive confinement of the mode, so that mode conversion is performed smoothly.

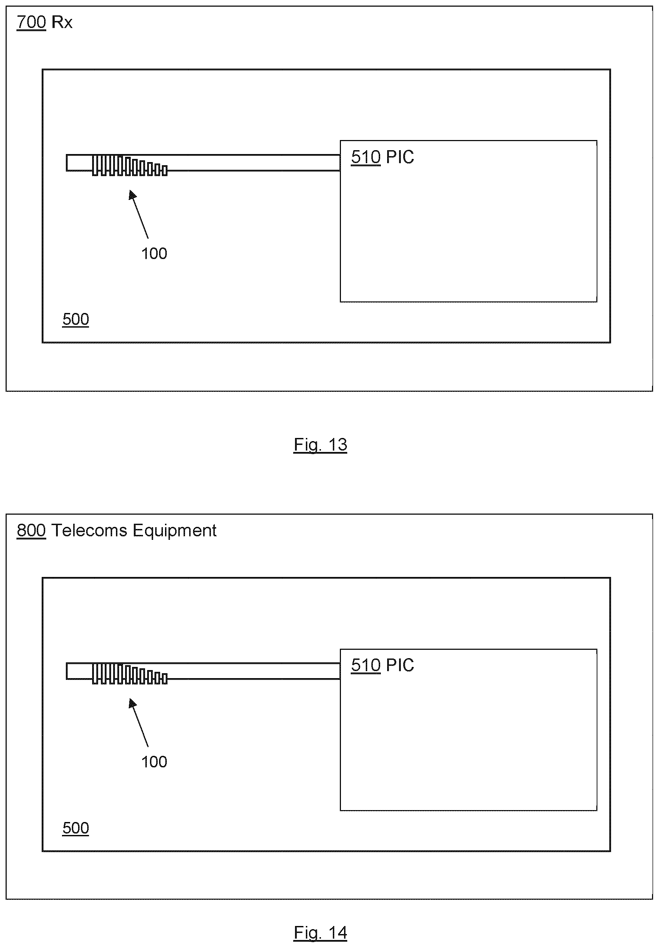

Referring to Figure 13, an embodiment provides an optical receiver 700 comprising an optical device 500, 600. The PIC 510 of the optical device includes one or more photodetectors.

Referring to Figure 14, an embodiment provides telecommunications equipment 800 comprising an optical device 500, 600. The PIC 510 of the optical device includes one or more optical components for receiving and processing an optical signal carrying communications traffic.

## Claims

**1.** A polarisation converter (100; 200; 300; 400) comprising:

a substrate (102);
a waveguide core (104) provided on the substrate, the waveguide core having a top surface (106) and a side surface (108); and
a sub-wavelength grating structure (110) extending from the waveguide core, the sub-wavelength grating structure comprising a top section (112) extending outwardly from the top surface of the waveguide core and a lateral section (114) extending laterally from the side surface of the waveguide core and from the top section, wherein a lateral width of one of the top section and the lateral section reduces along a length of the waveguide core.

2. A polarisation converter as claimed in claim 1, wherein the waveguide core (104) has a cross-sectional shape configured to preferentially support propagation of light having one of a transverse electric, TE, mode and a transverse magnetic, TM, mode and wherein said lateral width reduction of the sub-wavelength grating structure (110) is configured to cause rotation of the polarisation of light having the other of the TE mode and TM mode into said preferentially supported one of the TE mode and the TM mode.

3. A polarisation converter as claimed in claim 2, wherein the waveguide core (104) has a cross-sectional shape configured to preferentially support propagation of light having the TE mode and wherein the lateral width of the top section (112a) reduces along a length of the waveguide core to cause rotation of the polarisation of light from the TM mode into the TE mode.

4. A polarisation converter as claimed in claim 3, wherein the lateral width of the lateral section (114) reduces along a further length of the waveguide core.

5. A polarisation converter as claimed in claim 2, wherein the waveguide core has a cross-sectional shape configured to preferentially support propagation of light having the TM mode and wherein the lateral width of the lateral section reduces along a length of the waveguide core to cause rotation of the polarisation of light from the TE mode into the TM mode.

6. A polarisation converter as claimed in any preceding claim, wherein the waveguide core is surrounded by cladding and further comprising a layer (310) of a material having a refractive index higher than a refractive index of the cladding, said layer of material extending across at least part of the sub-wavelength grating structure.

7. A polarisation converter as claimed in any preceding claim, wherein a layer of material extends across at least part of the sub-wavelength grating structure, wherein said material is a two-dimensional material.

8. A polarisation converter as claimed in claim 7, wherein said layer of material is a graphene foil (310); or, wherein said layer of material is a graphene foil (310) and wherein a lateral width of an end section (310a) of said layer of material reduces along the length of the waveguide core.

9. A polarisation converter as claimed in any of claims 6 to 8, wherein said layer of material is provided at a distance less or equal to an extinction length of light propagating within the polarization converter.

10. A polarisation converter as claimed in any preceding claim, wherein the sub-wavelength grating structure (112) has a duty cycle (d) of 0.4 to 0.6.

11. An optical device (500; 600) comprising a photonic integrated circuit (510) and a polarisation converter (100; 200; 300; 400) according to any preceding claim, the polarisation converter arranged to output light having a desired polarisation mode towards the photonic integrated circuit.

12. An optical device as claimed in claim 11, further comprising an edge coupler (602) arranged to deliver light to the polarisation converter, the edge coupler comprising a tapered waveguide core (620) having a width that increases along a length of the waveguide core and a further sub-wavelength grating structure (610) extending from the tapered waveguide core, the further sub-wavelength grating structure comprising a top section (612) extending outwardly from a top surface of the tapered waveguide core and a lateral section (614) extending laterally from at least one side surface of the tapered waveguide core and from the top section.

13. An optical device as claimed in claim 12, wherein the further sub-wavelength grating structure (610) has a duty cycle, the duty cycle varying along the length of the tapered waveguide core.

14. An optical receiver (700) comprising an optical device (500; 600) as claimed in any of claims 11 to 13.

15. Telecommunications equipment (800) comprising an optical device (500; 600) as claimed in any of claims 11 to 13.

**Patentansprüche**

1. Polarisationswandler (100; 200; 300; 400), umfassend:

ein Substrat (102);

einen Wellenleiterkern (104), der auf dem Substrat vorgesehen ist, wobei der Wellenleiterkern eine obere Oberfläche (106) und eine Seitenfläche (108) aufweist; und

eine Subwellenlängen-Gitterstruktur (110), die sich vom Wellenleiterkern erstreckt, wobei die Subwellenlängen-Gitterstruktur einen oberen Abschnitt (112), der sich von der oberen Oberfläche des Wellenleiterkerns nach außen erstreckt, und einen lateralen Abschnitt (114) umfasst, der sich lateral von der Seitenfläche des Wellenleiterkerns und vom oberen Abschnitt erstreckt,

wobei eine laterale Breite eines von dem oberen Abschnitt und dem lateralen Abschnitt entlang einer Länge des Wellenleiterkerns abnimmt.

2. Polarisationswandler nach Anspruch 1, wobei der Wellenleiterkern (104) eine Querschnittsform aufweist, die so ausgestaltet ist, dass sie vorzugsweise Ausbreitung von Licht mit einer von einer transversalen elektrischen, TE, Mode und einer transversalen magnetischen, TM, Mode unterstützt, und wobei die Abnahme der lateralen Breite der Subwellenlängen-Gitterstruktur (110) so ausgestaltet ist, dass sie Drehung der Polarisation von Licht mit der anderen von der TE-Mode und der TM-Mode in die eine vorzugsweise unterstützte von der TE-Mode und der TM-Mode bewirkt.

3. Polarisationswandler nach Anspruch 2, wobei der Wellenleiterkern (104) eine Querschnittsform aufweist, die so ausgestaltet ist, dass sie vorzugsweise Ausbreitung von Licht mit der TE-Mode unterstützt, und wobei die laterale Breite des oberen Abschnitts (112a) entlang einer Länge des Wellenleiterkerns abnimmt, um Drehung der Polarisation von Licht von der TM-Mode in die TE-Mode zu bewirken.

4. Polarisationswandler nach Anspruch 3, wobei die laterale Breite des lateralen Abschnitts (114) entlang einer weiteren Länge des Wellenleiterkerns abnimmt.

5. Polarisationswandler nach Anspruch 2, wobei der Wellenleiterkern eine Querschnittsform aufweist, die so ausgestaltet ist, dass sie vorzugsweise Ausbreitung von Licht mit der TM-Mode unterstützt, und wobei die laterale Breite des lateralen Abschnitts entlang einer Länge des Wellenleiterkerns abnimmt, um Drehung der Polarisation von Licht von der TE-Mode in die TM-Mode zu bewirken.

6. Polarisationswandler nach einem der vorhergehenden Ansprüche, wobei der Wellenleiterkern von einem Mantel umgeben ist und ferner eine Schicht (310) aus einem Material mit einem Brechungsindex umfasst, der höher als ein Brechungsindex des Mantels ist, wobei sich die Schicht aus Material zumindest über einen Teil der Subwellenlängen-Gitterstruktur erstreckt.

7. Polarisationswandler nach einem der vorhergehenden Ansprüche, wobei sich eine Schicht aus Material zumindest über einen Teil der Subwellenlängen-Gitterstruktur erstreckt, wobei das Material ein zweidimensionales Material ist.

8. Polarisationswandler nach Anspruch 7, wobei die Schicht aus Material eine Graphenfolie (310) ist; oder wobei die Schicht aus Material eine Graphenfolie (310) ist und wobei eine laterale Breite eines Endabschnitts (310a) der Schicht aus Material entlang der Länge des Wellenleiterkerns abnimmt.

9. Polarisationswandler nach einem der Ansprüche 6 bis 8, wobei die Schicht aus Material in einem Abstand vorgesehen ist, der kleiner als oder gleich wie eine Extinktionslänge von Licht ist, das sich innerhalb des Polarisationswandlers ausbreitet.

10. Polarisationswandler nach einem der vorhergehenden Ansprüche, wobei die Subwellenlängen-Gitterstruktur (112) einen Arbeitszyklus (d) von 0,4 bis 0,6 aufweist.

11. Optische Vorrichtung (500; 600), umfassend eine integrierte photonische Schaltung (510) und einen Polarisationswandler (100; 200; 300; 400) nach einem der vorhergehenden Ansprüche, wobei der Polarisationswandler zum Ausgeben von Licht mit einer gewünschten Polarisationsmode an die integrierte photonische Schaltung ausgelegt ist.

12. Optische Vorrichtung nach Anspruch 11, ferner umfassend einen Kantenkoppler (602), der zum Zuführen von Licht zum Polarisationswandler ausgelegt ist, wobei der Kantenkoppler einen konischen Wellenleiterkern (620) mit einer Breite, die entlang einer Länge des Wellenleiterkerns zunimmt, und eine weitere Subwellenlängen-Gitterstruktur (610) umfasst, die sich vom konischen Wellenleiterkern erstreckt, wobei die weitere Subwellenlängen-Gitterstruktur einen oberen Abschnitt (612), der sich von einer oberen Oberfläche des konischen Wellenleiterkerns nach außen erstreckt, und einen lateralen Abschnitt (614) umfasst, der sich lateral von mindestens einer Seitenfläche des konischen Wellenleiterkerns und vom oberen Abschnitt erstreckt.

13. Optische Vorrichtung nach Anspruch 12, wobei die weitere Subwellenlängen-Gitterstruktur (610) einen Arbeitszyklus aufweist, wobei der Arbeitszyklus entlang der Länge des konischen Wellenleiterkerns variiert.

14. Optischer Empfänger (700), umfassend eine optische Vorrichtung (500; 600) nach einem der Ansprüche 11 bis 13.

15. Telekommunikationseinrichtung (800), umfassend eine optische Vorrichtung (500; 600) nach einem der Ansprüche 11 bis 13.

**Revendications**

1. Convertisseur de polarisation (100 ; 200 ; 300 ; 400) comprenant :

   un substrat (102) ;
   un coeur de guide d'onde (104) prévu sur le substrat, le coeur de guide d'onde comportant une surface supérieure (106) et une surface latérale (108) ; et
   une structure de réseau de sous-longueur d'onde (110) s'étendant depuis le coeur de guide d'onde, la structure de réseau de sous-longueur d'onde comprenant une section supérieure (112) s'étendant vers l'extérieur depuis la surface supérieure du coeur de guide d'onde et une section latérale (114) s'étendant latéralement depuis la surface latérale du coeur de guide d'onde et depuis la section supérieure,
   dans lequel une largeur latérale de l'une de la section supérieure et de la section latérale diminue le long d'une longueur du coeur de guide d'onde.

2. Convertisseur de polarisation selon la revendication 1, dans lequel le coeur de guide d'onde (104) présente une forme en coupe transversale configurée pour prendre en charge préférentiellement une propagation de la lumière ayant l'un d'un mode électrique transversal, TE, et d'un mode magnétique transversal, TM, et dans lequel ladite diminution de largeur latérale de la structure de réseau de sous-longueur d'onde (110) est configurée pour provoquer une rotation de la polarisation de la lumière ayant l'autre du mode TE et du mode TM dans celui pris en charge préférentiellement du mode TE et du mode TM.

3. Convertisseur de polarisation selon la revendication 2, dans lequel le coeur de guide d'onde (104) présente une forme en coupe transversale configurée pour prendre en charge préférentiellement une propagation de la lumière ayant le mode TE et dans lequel la largeur latérale de la section supérieure (112a) diminue le long d'une longueur du coeur de guide d'onde pour provoquer une rotation de la polarisation de la lumière du mode TM au mode TE.

4. Convertisseur de polarisation selon la revendication 3, dans lequel la largeur latérale de la section latérale (114) diminue le long d'une autre longueur du coeur de guide d'onde.

5. Convertisseur de polarisation selon la revendication 2, dans lequel le coeur de guide d'onde présente une forme en coupe transversale configurée pour prendre en charge préférentiellement une propagation de la lumière ayant le mode TM et dans lequel la largeur latérale de la section latérale diminue le long d'une longueur du coeur de guide d'onde pour provoquer une rotation de la polarisation de la lumière du mode TE au mode TM.

6. Convertisseur de polarisation selon l'une quelconque des revendications précédentes, dans lequel le coeur de guide d'onde est entouré d'une gaine et comprend en outre une couche (310) d'un matériau présentant un indice de réfraction supérieur à un indice de réfraction de la gaine, ladite couche de matériau s'étendant à travers au moins une partie de la structure de réseau de sous-longueur d'onde.

7. Convertisseur de polarisation selon l'une quelconque des revendications précédentes, dans lequel une couche de matériau s'étend à travers au moins une partie de la structure de réseau de sous-longueur d'onde, dans lequel ledit matériau est un matériau bidimensionnel.

8. Convertisseur de polarisation selon la revendication 7, dans lequel ladite couche de matériau est une feuille de graphène (310) ; ou dans lequel ladite couche de matériau est une feuille de graphène (310) et dans lequel une largeur latérale d'une section d'extrémité (310a) de ladite couche de matériau diminue le long de la longueur du coeur de guide d'onde.

**9.** Convertisseur de polarisation selon l'une quelconque des revendications 6 à 8, dans lequel ladite couche de matériau est prévue à une distance inférieure ou égale à une longueur d'extinction de la lumière se propageant à l'intérieur du convertisseur de polarisation.

**10.** Convertisseur de polarisation selon l'une quelconque des revendications précédentes, dans lequel la structure de réseau de sous-longueur d'onde (112) présente un rapport cyclique (d) de 0,4 à 0,6.

**11.** Dispositif optique (500 ; 600) comprenant un circuit intégré photonique (510) et un convertisseur de polarisation (100 ; 200 ; 300 ; 400) selon l'une quelconque des revendications précédentes, le convertisseur de polarisation étant agencé pour délivrer une lumière ayant un mode de polarisation souhaité vers le circuit intégré photonique.

**12.** Dispositif optique selon la revendication 11, comprenant en outre un coupleur de bord (602) agencé pour distribuer une lumière au convertisseur de polarisation, le coupleur de bord comprenant un coeur de guide d'onde effilé (620) présentant une largeur qui augmente le long d'une longueur du coeur de guide d'onde et une autre structure de réseau de sous-longueur d'onde (610) s'étendant depuis le coeur de guide d'onde effilé, l'autre structure de réseau de sous-longueur d'onde comprenant une section supérieure (612) s'étendant vers l'extérieur depuis une surface supérieure du coeur de guide d'onde effilé et une section latérale (614) s'étendant latéralement depuis au moins une surface latérale du coeur de guide d'onde effilé et depuis la section supérieure.

**13.** Dispositif optique selon la revendication 12, dans lequel l'autre structure de réseau de sous-longueur d'onde (610) présente un rapport cyclique, le rapport cyclique variant le long de la longueur du coeur de guide d'onde effilé.

**14.** Récepteur optique (700) comprenant un dispositif optique (500 ; 600) selon l'une quelconque des revendications 11 à 13.

**15.** Equipement de télécommunications (800) comprenant un dispositif optique (500 ; 600) selon l'une quelconque des revendications 11 à 13.

Fig. 1

Fig. 2

110

d

(A)

118

118

(B)

d

<u>Fig. 3</u>

TM

TE

100

<u>Fig. 4</u>

Fig. 5

Fig. 6

Fig. 7

Fig. 8

Fig. 9

Fig. 10

510 PIC

100

500

Fig. 11

600

602

100

118

112

610

108

630

630

614

106

614

112

620

618

612

118

114

110

Fig. 12

700 Rx

510 PIC

100

500

Fig. 13

800 Telecoms Equipment

510 PIC

100

500

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018145753 A1

**Non-patent literature cited in the description**

- **YIN XU et al.** Ultracompact and high efficient silicon-based polarization splitter-rotator using a partially-etched subwavelength grating coupler. *SCIENTIFIC REPORTS,* 16 June 2016, vol. 6 (1

- **YIN XU ; JINBIAO XIAO.** Ultracompact and high efficient silicon-based polarization splitter rotator using a partially etched subwavelength grating coupler. *Nature,* 2016, vol. 6, 27949
- **RAETHER H.** Surface plasmons on smooth and rough surfaces and on gratings. Springer, 1988